# FASCICULE DE BREVET EUROPEEN

(11) **EP 2 443 075 B1**
(45) Date de publication et mention de la délivrance du brevet: **07.12.2016**
(21) Numéro de dépôt: 10734253.7
(22) Date de dépôt: 16.06.2010
(51) Int. Cl.: C04B 35/486, C04B 35/50, C04B 35/624, C04B 35/645, C04B 38/00, B82Y 30/00, H01M 8/1246, H01M 8/1253, H01M 8/126, B01D 71/02, C04B 111/00

(54) **FABRICATION DE MATÉRIAUX CÉRAMIQUES AUTOSUPPORTÉS DE FAIBLE ÉPAISSEUR À BASE D'OXYDES MÉTALLIQUES**
HERSTELLUNG VON SELBSTTRAGENDEN METALLOXIDHALTIGEN KERAMIKMATERIALIEN MIT VERRINGERTER DICKE
PRODUCTION OF SELF-SUPPORTING CERAMIC MATERIALS HAVING A REDUCED THICKNESS AND CONTAINING METAL OXIDES

(30) Priorité: 19.06.2009 FR 0954168
(43) Date de publication de la demande: 25.04.2012
(73) Titulaire: Electricité de France, 75008 Paris (FR); Université Paul Sabatier (Toulouse III), 31400 Toulouse (FR)
(72) Inventeur: ZAHID, Mohsine, 65385 Ruedesheim Am Rhein (DE); RIEU, Mathilde, F-31400 Toulouse (FR); ESTOURNES, Claude, F-31370 Rieumes (FR); LENORMAND, Pascal, F-31400 Toulouse (FR); ANSART, Florence, F-31670 Labege (FR)
(74) Mandataire: Cabinet Plasseraud
(86) Numéro de dépôt international: PCT/FR2010/051204
(87) Numéro de publication internationale: WO 2010/146311

(56) Documents cités:
- EP-A2- 1 043 149
- WO-A1-2004/083147
- JP-A- 7 073 891
- US-A1- 2009 081 512
- US-B1- 7 494 557
- BERNARD-GRANGER ET AL: "Spark plasma sintering of a commercially available granulated zirconia powder: I. Sintering path and hypotheses about the mechanism(s) controlling densification" ACTA MATERIALIA, ELSEVIER, OXFORD, GB, vol. 55, no. 10, 3 mai 2007 (2007-05-03), pages 3493-3504, XP022059676 ISSN: 1359-6454 cité dans la demande
- TAKEUCHI T.; KONDOH I.; TAMARI N.; BALAKRISHNAN N.; NOMURA K.; KAGEYAMA H.; TAKEDA Y.: "Improvement of mechanical strength of 8 mol% yttria-stabilized zirconia ceramics by spark-plasma sintering" JOURNAL OF THE ELECTROCHEMICAL SOCIETY, vol. 149, no. 4, 1 mars 2002 (2002-03-01), pages A455-A461, XP002564328 Electrochem. Soc., USA ISSN: 0013-4651 DOI: 10.1149/1.1456915 & TAKEUCHI TOMONARI ET AL: "Improvement of mechanical strength of 8 mol% yttria-stabilized zirconia ceramics by spark-plasma sintering" HCAPLUS, 1 mars 2002 (2002-03-01), XP002283582
- CHAKRAVARTY D ET AL: "High strength porous alumina by spark plasma sintering" JOURNAL OF THE EUROPEAN CERAMIC SOCIETY, ELSEVIER SCIENCE PUBLISHERS, BARKING, ESSEX, GB, vol. 29, no. 8, 1 mai 2009 (2009-05-01), pages 1361-1369, XP026071103 ISSN: 0955-2219 [extrait le 2008-10-01]
- SUZUKI T ET AL: "Flexural strength of Y2O3-TZP ceramics produced by sheet molding" CERAMICS INTERNATIONAL, ELSEVIER, AMSTERDAM, NL LNKD- DOI:10.1016/0272-8842(93)90035-P, vol. 19, no. 3, 1 janvier 1993 (1993-01-01), pages 141-149, XP024158018 ISSN: 0272-8842 [extrait le 1993-01-01]
- BERNARD-GRANGER G ET AL: "Spark plasma sintering of a commercially available granulated zirconia powder-II. Microstructure after sintering and ionic conductivity" ACTA MATERIALIA, ELSEVIER, OXFORD, GB, vol. 56, no. 17, 1 octobre 2008 (2008-10-01), pages 4658-4672, XP025429201 ISSN: 1359-6454 [extrait le 2008-06-26]
- OKAMOTO M ET AL: "Phase transition and electrical conductivity of scandia-stabilized zirconia prepared by spark plasma sintering process" SOLID STATE IONICS, NORTH HOLLAND PUB. COMPANY. AMSTERDAM; NL, NL, vol. 176, no. 7-8, 28 février 2005 (2005-02-28), pages 675-680, XP025255342 ISSN: 0167-2738 [extrait le 2005-02-28]
- T. MORI, J. DRENNAN, D. R. OU, F. YE: "Design of high quality doped CeO2 solid electrolytes with nanohetero structure" NUKLEONIKA vol. 51, no. Supplement 1, 1 janvier 2006 (2006-01-01), pages S11-S18, XP002564329 Institute of Nuclear Chemistry and Technology, Poland Extrait de l'Internet: URL:http://www.nukleonika.pl/www/back/full /vol51_2006/v51s1p011f.pdf [extrait le 2010-01-15]
- MICHIHITO MUROI ET AL: "Preparation of nano-grained zirconia ceramics by low-temperature, low-pressure spark plasma sintering" JOURNAL OF MATERIALS SCIENCE, KLUWER ACADEMIC PUBLISHERS, BO, vol. 43, no. 19, 13 juillet 2008 (2008-07-13), pages 6376-6384, XP019644242 ISSN: 1573-4803
- WINNUBST A J A ET AL: "Microstructure characteristics of ultra-fine ZrO2@?Y2O3 ceramic powders", MATERIALS SCIENCE AND ENGINEERING A: STRUCTURAL MATERIALS:PROPERTIES, MICROSTRUCTURE & PROCESSING, LAUSANNE, CH, vol. 109, 1 March 1989 (1989-03-01), pages 215-219, XP025437090, ISSN: 0921-5093, DOI: 10.1016/0921-5093(89)90590-X [retrieved on 1989-03-01]
- You-Kee Lee ET AL: "Microstructure and electrical conductivity of yttria-stabilized zirconia electrolyte thin plates produced by the doctor blade method", Journal of Materials Science Letters, vol. 16, no. 8, 1 January 1997 (1997-01-01), pages 678-682, XP055116049, ISSN: 0261-8028, DOI: 10.1023/A:1018544006239

## Description

La présente invention concerne la fabrication de matériaux céramiques autosupportés, denses et de faible épaisseur, à base d'oxydes de zirconium ou d'oxyde de cérium et l'utilisation de tels matériaux en tant qu'électrolyte solide dans des piles à combustible.

La technologie des céramiques est aujourd'hui un sujet de premier ordre, car les céramiques sont les supports et/ou les composants essentiels des applications du futur. Par exemple, des céramiques sont utilisées dans certaines piles à combustible qui représentent actuellement une des technologies les plus prometteuses dans le domaine de la production d'énergie (SOFC, PCFC, cellules d'électrolyse haute température).

Une pile à combustible est un système de conversion électrochimique permettant de transformer de l'énergie chimique contenue dans un combustible, par exemple l'hydrogène ou une source d'hydrogène, en énergie électrique et accessoirement en chaleur. Actuellement, les deux principales technologies de piles à combustible sont les piles à combustible à oxyde solide (en anglais *solid oxide fuel cell,* SOFC) et les piles à combustible à membrane échangeuse de protons (en anglais *proton exchange membrane fuel cell,* PEMFC). Les SOFC sont potentiellement plus intéressantes que les PEMFC de par leur rendement énergétique total élevé qui est généralement de l'ordre de 80 à 90%. Cependant, elles nécessitent des températures de fonctionnement élevées, de l'ordre de 750 à 1000°C, ce qui impose l'emploi de matériaux d'électrolyte en céramique. Les céramiques intéressantes sont à base de zircone, éventuellement stabilisée par un métal M (Zr₁₋ₓMₓO₂) où M est choisi parmi l'yttrium, le scandium et le cérium, ou à base de cérine, éventuellement stabilisée par un métal M', (Ce₁₋ₓM'ₓO₂) où M' est choisi parmi le gadolinium, le scandium, le samarium et l'yttrium.

L'amélioration des performances des SOFC passe par la diminution de l'épaisseur de cet électrolyte solide pour les raisons suivantes :
- Le rendement électrique d'une pile est en partie gouverné par la résistance de l'électrolyte. Cette résistance spécifique est exprimée par R = (r*e)/A, où r désigne la résistivité de l'électrolyte, e son épaisseur et A sa surface. Plus l'épaisseur de l'électrolyte sera faible, meilleur sera le rendement électrique de la pile.
- A rendement énergétique égal, le fait de diminuer l'épaisseur de l'électrolyte permet d'abaisser la température de fonctionnement de la pile et une température plus basse se traduira par une durée de vie plus longue de la pile.
- L'amincissement de l'électrolyte céramique de la pile permet sa miniaturisation et une diminution de son poids.
- Enfin, les matériaux céramiques sont très onéreux. La réduction des quantités de matières céramiques permet d'atteindre des gammes de coûts économiquement acceptables pour des applications grand public.

Pour répondre à cette attente, les SOFC de 3^{ème} génération ont apporté une première solution technique : elles comportent un support mécanique en métal sur lequel sont déposées des couches minces de matériaux actifs. Le support métallique, très bon conducteur thermique et électrique, évite toute inhomogénéité de température au sein de la cellule et assure une bonne collecte du courant. La résistance aux cycles thermiques est améliorée par la bonne tenue mécanique et la bonne conduction de la chaleur. Le support mécanique est facile à souder ou à raccorder et il pourrait également être utilisé pour le reformage interne du méthane. La difficulté de la technologie réside toutefois dans le dépôt de l'électrolyte solide sur le métal : après dépôt selon des techniques traditionnelles telles que le coulage en bande ou la sérigraphie, la densification de la céramique nécessite une étape de frittage à haute température (1600 °C) que le support métallique ne peut supporter.

Une alternative particulièrement intéressante à cette solution consisterait à disposer d'un électrolyte autosupporté de très faible épaisseur, ayant une résistance mécanique suffisante pour qu'on puisse y déposer les autres constituants de la cellule. Cela nécessite la mise au point de matériaux céramiques extrêmement denses, grâce à une densification parfaitement maîtrisée, de très faible épaisseur, avec une surface allant de quelques centimètres carrés à plusieurs dizaines de centimètres carrés, manipulables et présentant une résistance mécanique satisfaisante.

Certaines publications scientifiques décrivent des tentatives de synthèse de tels matériaux. On peut citer en particulier l'article de MM. BERNARD-GRANGER et GUIZARD, « Spark plasma sintering of a commercially available granulated zirconia powder : I. Sintering path and hypotheses about the mechanism(s) controlling densification », Acta Materialia 55 (2007) 3493-3504. Cet article décrit un procédé de fabrication d'un matériau céramique à base d'oxyde métallique par frittage flash. La poudre mise en oeuvre dans ce procédé est une poudre de zircone commerciale présentant des cristallites de grand diamètre moyen, compris entre 50 et 70 nm, des agrégats de cristallites de grande taille, compris entre 10 et 80 µm, et une surface spécifique faible, de seulement 16,4 m²/g. Les matériaux céramiques obtenus sont des pastilles de 8 mm de diamètre (soit une surface d'environ 0,5 cm² seulement) ayant une épaisseur de 1,6 mm. Ces résultats sont insuffisants pour les applications envisagées, car il serait souhaitable d'obtenir des matériaux ayant une épaisseur inférieure ou égale à 200 µm, pour une surface d'au moins 1 cm². Une plaque avec ces dimensions qui serait obtenue selon le procédé décrit dans l'article de MM. BERNARD-GRANGER et GUIZARD ne possèderait pas une résistance mécanique suffisante.

L'article de A.J.A. Winnubst et al. (« Microstructure Characteristics of Ultra-fine ZrO2-Y2O3 Ceramic Powders », Materials Science and Engineering, A109 (1989) 215-219) divulgue des poudres de zirconium dopées à l'yttrium préparées par des méthodes de gel-précipitation, avec des tailles de cristaux de l'ordre de 8nm et une distribution de taille restreinte. Cet article divulgue deux poudres produites d'une part à partir de précurseurs alcoxyles et d'autre part à partir de précurseurs chlorés (tableau 1). « Cependant, les deux types de poudres sont bel et bien constitués d'agglomérats relativement faibles qui sont complètement effondrés sous pression isostatique à 400 mPa (page 217, phrase commençant à la dernière ligne de la colonne de gauche).

Le document EP1043149 divulgue des empilements de matériaux céramiques avant frittage flash pour obtenir des structures graduelles du même matériau ou de différents matériaux.

L'article de T ; Takeuchi et al. (« Improvement of mechanical strength of 8 mol% yttria-stabilized zirconia ceramics by spark-plasma sintering» Journal of the Electrochemical Society, vol. 149, no. 4, 1 mars 2002, pages A455- A461, Electrochem. Soc., USA) divulgue l'utilisation de feuilles de graphite pendant la procédé de frittage flash de matériaux céramiques SOFC pour recouvrir l'enceinte de compression afin de retirer les échantillons de manière aisée après frottage. L'article de T ; Takeuchi et al. divulgue également des traitements thermiques post-frittage pour supprimer les contaminations de carbone liées à la présence de graphite durant le frittage, ces traitements thermiques étant réalisés sous air à des températures de l'ordre de 1000°C pendant 2 heures.

US7494557 divulgue l'utilisation de matériaux sacrificiels, tels que du graphite, pour produire des cavités internes dans des structures céramiques.

A la connaissance de la Demanderesse de tels matériaux céramiques à la fois denses, imperméables aux gaz et liquides, de très faible épaisseur avec une grande surface et présentant une stabilité mécanique satisfaisante n'ont jusqu'ici pas été décrits dans la littérature et l'obtention de céramiques à base de Zr₁₋ₓMₓO₂, où M est choisi parmi l'yttrium, le scandium et le cérium, ou à base de Ce₁₋ₓM'ₓO₂, où M' est choisi parmi le gadolinium, le scandium, le samarium et l'yttrium, utilisables comme électrolytes autosupportés dans des SOFC reste toujours un défi.

Il est du mérite de la Société Demanderesse d'avoir mis au point un procédé de fabrication de tels oxydes autosupportés.

L'originalité du procédé de la présente invention réside dans l'utilisation d'une poudre nanocristalline présentant des caractéristiques techniques très particulières dans un procédé jusqu'ici peu utilisé qui est le frittage flash. Proche du frittage sous haute pression, la technique dite de Frittage Flash, ou « Spark Plasma Sintering » (SPS) selon la terminologie anglo-saxonne, est extrêmement efficace pour la mise en forme de tout type de matériaux (métaux, céramiques, polymères et leurs composites). La Demanderesse a découvert que la mise en oeuvre de cette technique avec une poudre nanocristalline ayant une microstructure particulière, caractérisée en particulier par la présence d'agglomérats peu compacts et par une surface spécifique élevée, permettait d'obtenir, par frittage flash, des matériaux céramiques denses, imperméables aux fluides, extrêmement minces et présentant une bonne résistance mécanique.

La présente invention a par conséquent pour objet un procédé de fabrication d'un matériau céramique à base d'oxyde métallique, comprenant, dans l'ordre, les étapes suivantes :
(a) l'introduction, dans un dispositif de frittage flash, d'une pluralité de couches d'une poudre nanocristalline
(b) le frittage flash de ladite poudre par application d'une pression comprise entre 50 et 150 MPa, à une température comprise entre 850 °C et 1400 °C, pendant une durée comprise entre 5 et 30 minutes

La poudre nanocristalline comprenant des cristallites et des agglomérats de cristallites d'un matériau de formule
Zr₁₋ₓMₓO₂ où M est choisi parmi l'yttrium, le scandium et le cérium, ou
Ce₁₋ₓM'ₓO₂, où M' est choisi parmi le gadolinium, le scandium, le samarium et l'yttrium,
où x est compris entre 0 et 0,2,
ladite poudre possédant
   ∘ une taille moyenne de cristallites, mesurée par diffraction de rayons X, comprise entre 5 et 50 nm (nanomètres),
   ∘une taille moyenne d'agglomérats de cristallites, mesurée par microscopie à balayage (MEB), comprise entre 0,5 et 20 µm (micromètres),
   ∘ une surface spécifique, mesurée par adsorption d'azote (méthode BET), comprise entre 20 et 100 m²/g ;
les différentes couches étant séparées les unes des autres par une feuille de séparation capable de résister aux conditions thermiques et mécaniques de l'étape de frittage (b), de manière à obtenir, après l'étape de frittage (b), un empilement de plusieurs plaques de céramiques et de feuilles de séparation disposées en alternance.

La poudre nanocristalline qui est utilisée lors de la première étape (a) de ce procédé est une poudre constituée essentiellement de particules d'un matériau de formule
Zr₁₋ₓYₓO₂,
Zr₁₋ₓScₓO₂,
Zr₁₋ₓCeₓO₂,
Ce₁₋ₓGdₓO₂,
Ce₁₋ₓSCₓO₂,
Ce₁₋ₓSMₓO₂, ou
Ce₁₋ₓYₓO₂
où x est compris entre 0 et 0,2.

Ces oxydes de zirconium ou de cérium, éventuellement stabilisés, sont choisis pour leur capacité à former, notamment grâce à leur bonne conductivité ionique, de bons électrolytes solides pour les piles à combustible de type SOFC.

Le pourcentage massique desdites particules nanocristallines de zircone ou de cérium, éventuellement stabilisée, dans le matériau fritté, sera de préférence supérieur à 90%, voire supérieur à 95%, et même supérieur à 98%.

Cette poudre nanocristalline comprend des cristallites individuels et des agglomérats de cristallites. Elle est caractérisée par sa granulométrie :
grâce à un courant électrique, continu - continu pulsé - ou alternatif, appliqué via des électrodes reliées au moule. Ce courant passe à travers l'enceinte de pressage conductrice et également à travers l'échantillon lorsque celui-ci est conducteur électrique.

L'application d'une pression uni-axiale présente l'avantage que les seules modifications dimensionnelles au cours du frittage flash de la pièce se produiront dans la direction de la force appliquée au cours de la compression. Les dimensions latérales de la céramique densifiée après refroidissement seront par conséquent identiques aux dimensions du moule. L'application d'une pression uni-axiale lors du cycle de frittage permet en outre d'éviter tous les phénomènes de déformation indésirables observés lors du frittage d'objets minces par les techniques conventionnelles.

Les paramètres fixés lors de l'étape de frittage flash sont la pression et la température à l'intérieur de l'enceinte et la durée de l'étape. Selon le procédé de l'invention :
- la pression est comprise entre 50 et 150 MPa, de préférence entre 80 et 120 MPa, et en particulier entre 90 et 110 MPa ;
- la température est comprise entre 850 °C et 1400 °C, de préférence entre 1000 et 1300 °C, et en particulier entre 1100 et 1250 °C ;
- l'étape a une durée totale comprise entre 5 et 30 minutes, de préférence entre 10 et 30 minutes, et en particulier entre 15 et 25 minutes.

En ce qui concerne la valeur du courant imposé, celui-ci doit être ajusté en fonction de la dimension du moule utilisé : plus la dimension est grande, plus le courant à imposer est important. A titre indicatif, le courant pourra être compris entre 1000 et 4000 A pour un moule cylindrique avec un diamètre de 5 cm.

Cette technique de frittage flash permet d'augmenter de manière significative les vitesses de frittage et ainsi d'obtenir, en des temps très brefs, des matériaux fortement densifiés tout en limitant la croissance des grains. Elle permet également d'associer différents matériaux en limitant leur réaction et de fritter à relativement basses températures des solides instables à haute température.

Cette absence de réaction s'avère particulièrement utile dans un mode de réalisation particulièrement préféré du procédé de la présente invention dans lequel plusieurs plaques céramiques de faible épaisseur sont frittées simultanément, en étant séparées les unes des autres par des feuilles de séparation. Ceci est possible non seulement grâce à la faible épaisseur des objets préparés mais en particulier grâce à la température de frittage relativement basse et à la durée de frittage brève qui permettent d'éviter ou de limiter la réaction du matériau céramique à comprimer avec le matériau formant les feuilles de séparation intercalaires.

Après frittage, on retire l'empilement du moule et l'on soumet l'empilement, constitué des plaques de matériau céramique densifié et des feuilles de séparation à une étape d'élimination des feuilles de séparation. Il peut s'agir d'un traitement thermique et/ou chimique de l'empilement. Ce traitement doit permettre de faire disparaître sélectivement les feuilles de séparation sans pour autant attaquer ou altérer le matériau céramique.

Les feuilles de séparation sont de préférence des feuilles de graphite et l'étape d'élimination comprend alors par exemple un traitement sous air à une température comprise entre 700 et 900 °C, pendant une durée comprise entre 30 et 120 minutes, de l'empilement fritté.

Dans ce mode de réalisation préféré, le procédé selon l'invention permet ainsi de réaliser simultanément plusieurs céramiques sur une échelle de temps qui n'excède pas quelques minutes. Le temps de frittage extrêmement réduit par rapport aux procédés de frittage conventionnels associé à une compression simultanée de plusieurs plaques, permet ainsi d'envisager une réduction drastique des coûts de fabrication et la production en grande série d'objets céramiques à configuration plane.

Les poudres nanocristallines présentant les caractéristiques techniques décrites ci-dessus ne sont pas ou pas encore disponibles commercialement, mais peuvent être préparées de façon relativement simple par des procédés sol-gel connus. Il convient toutefois de noter que le procédé de la présente invention n'est nullement limité à l'utilisation de poudres nanocristallines synthétisées par les procédés sol-gel décrits ci-après, ou par voie sol-gel en général.

Le procédé de la présente invention peut donc comprendre les étapes nécessaires à la fabrication de la poudre nanocristalline d'oxyde métallique utilisée à l'étape (a).

Dans un mode de réalisation particulier, le procédé de la présente invention comprend par conséquent en outre, avant l'étape (a) d'introduction de la poudre nanocristalline, une étape supplémentaire consistant en la synthèse de ladite poudre par une technique sol-gel.

Pour obtenir une poudre nanocristalline ayant les caractéristiques physico-chimiques telles que définies dans l'invention, il est nécessaire de choisir judicieusement les conditions de synthèse adéquates.

On peut distinguer principalement deux techniques de synthèse sol-gel appropriées permettant d'obtenir des poudres nanocristallines telles que décrites ci-dessus.

Dans une première variante, la poudre nanocristalline est synthétisée à partir d'une solution aqueuse acide de sels de zirconium, éventuellement en mélange avec des sels d'yttrium, de scandium ou de cérium, ou à partir d'une solution aqueuse acide de sels de cérium, éventuellement en mélange avec des sels de gadolinium, de scandium, de samarium ou d'yttrium, ladite solution contenant en outre de l'hexaméthylène-tétramine (HMTA) et d'acétylacétone (ACAC).

Dans un premier temps, on prépare une solution aqueuse acide contenant au moins 3 constituants, à savoir :
a) au moins un sel de zirconium, éventuellement en mélange avec un sel d'yttrium, de scandium ou de cérium, ou au moins un sel de cérium, éventuellement en mélange avec un sel de gadolinium, de scandium, de samarium ou d'yttrium, à l'état dissous,
b) au moins un mélange d'hexaméthylène-tétramine (HMTA) et d'acétylacétone (ACAC) en un rapport molaire de l'HMTA à l'ACAC compris entre 0,9/1 et 1,1/1,
c) un acide organique ou minéral en une quantité suffisante pour l'obtention d'un pH compris entre 2 et 6.

Le sel est de préférence un nitrate ou un oxychlorure, et il sera introduit avec une concentration comprise entre 0,05 et 0,5 mol.L⁻¹.

L'HMTA et l'ACAC sont utilisés de préférence chacun en une concentration allant de 0,25 à 1,5 mol.L⁻¹.

L'acide est, de préférence, un acide organique choisi parmi l'acide acétique, l'acide propanoïque et l'acide trifluoroacétique.

Dans un second temps, cette solution est chauffée à une température comprise entre 50 °C et 100 °C, de façon préférée entre 60 °C et 90 °C, et de façon encore plus préférée entre 70 °C et 80 °C. On observe alors une gélification de la solution, attribuée à la polymérisation de l'HMTA et de l'ACAC. Tout au long de cette étape de gélification, les sels métalliques sont sous forme de complexes de coordination avec les réactifs HMTA et ACAC. Les concentrations initiales des réactifs et les conditions de chauffage (température et durée) sont de préférence ajustées de manière à ce que, à la fin de l'étape de gélification, le gel obtenu présente une viscosité Brookfield, mesurée à 25 °C comprise entre 20 et 80 mPa.s. Pour les températures de chauffage indiquées ci-dessus, c'est généralement le cas au bout d'une durée de chauffage comprise entre 10 et 60 minutes.

Le gel obtenu est ensuite soumis à un traitement thermique à une température supérieure ou égale à 400 °C, pendant une durée comprise entre 6 et 8 heures, de manière à donner une poudre amorphe exempte de tout résidu organique.

Ladite poudre amorphe est ensuite calcinée à une température comprise entre 500 °C et 1000 °C, pendant une durée d'au moins 2 heures, et transformée ainsi en la poudre nanocristalline d'oxyde métallique souhaitée.

Une autre voie de synthèse sol-gel permettant d'obtenir des poudres nanocristallines utilisables dans la présente invention est la voie, plus classique, partant non pas des sels métalliques de zirconium ou de cérium, mais des alcoxydes de ces métaux.

Cette voie comprend de façon connue la préparation d'un sol contenant l'ensemble des réactifs, l'hydrolyse des fonctions alcoxy et la condensation des fonctions métal-OH actives ainsi libérées, puis une étape de maturation aboutissant à la formation d'un gel qui sera ensuite séché de façon appropriée.

On décrit ici, à titre d'exemple, une synthèse sol-gel d'une poudre nanocristalline de zircone yttriée :
On prépare d'abord une solution de tétraalcoxy-zirconium et de sel d'yttrium, par exemple du nitrate d'yttrium, dans un solvant organique. Les groupes alcoxy sont généralement des groupes alcoxy en C₁₋₆, de préférence en C₃₋₄, ces derniers ayant une réactivité particulièrement appropriée. Le solvant organique utilisé est de préférence celui correspondant à l'alcool libéré par hydrolyse des groupes alcoxy. On préfère tout particulièrement utiliser du tétra(n-propoxy)-zirconium en solution dans du n-propanol. La concentration initiale de tétraalcoxy-zirconium est généralement comprise entre 0,01 et 1 mol/L. La solution sera préparée sous atmosphère inerte, l'alcoxyde étant très réactif vis-à-vis de l'humidité de l'air.

La solution devra également contenir une certaine quantité d'un agent chélatant tel que l'acétylacétone ou l'acide acétique. Cet agent chélatant est essentiel à la formation d'un sol homogène et sert principalement à empêcher la formation d'un précipité solide au moment de l'addition de l'eau. Le rapport du nombre de moles d'agent chélatant au nombre total de moles d'atomes de zirconium et d'yttrium présents dans la solution (= rapport de complexation) est de préférence compris entre 0,1 et 1.

Ensuite, on ajoute à cette solution organique essentiellement anhydre une quantité déterminée d'eau. Le rapport du nombre de moles d'eau au nombre total de moles d'atomes de zirconium et d'yttrium présents dans la solution (= taux d'hydrolyse) est de préférence compris entre 1 et 30.

Le sol, ainsi constitué, est ensuite laissé au repos et on observera la formation lente d'un gel due à l'agrégation des espèces formées au sein du sol. Cette étape de gélification peut être accélérée par un léger étuvage du sol, par exemple à une température comprise entre 40 et 80 °C.

Une fois la transition sol-gel atteinte, la phase liquide est éliminée par séchage. La technique de séchage peut avoir une grande influence sur la masse volumique des poudres obtenues. Ainsi, le séchage du gel par simple évaporation de la phase solvant/eau à pression atmosphérique et à température ambiante ou en étuve chauffante conduit à la formation d'un xérogel.

Dans un mode de réalisation préféré, l'élimination de la phase liquide se fait par séchage supercritique en autoclave, à une température supérieure à la température critique et à une pression supérieure à la pression critique du solvant. Ce type de séchage se pratique généralement en augmentant lentement la température et la pression du système avant de dépressuriser à température constante après être passé au dessus du point critique du liquide. Le séchage supercritique d'un gel de zircone yttriée préparé de la manière décrite ci-dessus aboutit à un monolithe translucide de microstructure très aérée appelé aérogel.

Après broyage mécanique du xérogel ou de l'aérogel, traitement thermique du broyat à une température supérieure à 300 °C servant principalement à éliminer le solvant résiduel et éventuellement une étape de calcination à une température comprise entre 500 °C et 1000 °C, on obtient des particules cristallines de géométrie sphérique, de taille nanométrique et de surface spécifique supérieure à 50 m²/g, qui correspondent à la poudre nanocristalline d'oxyde métallique souhaitée.

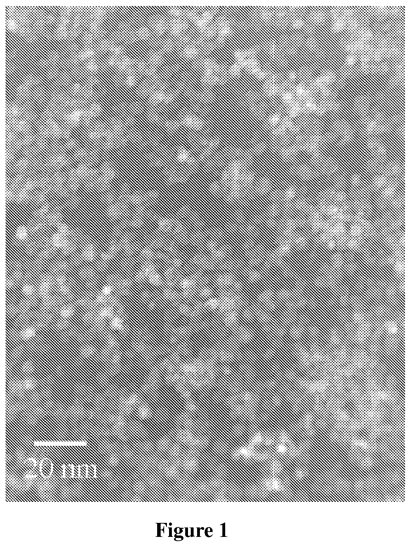

La Figure 1 montre un cliché de microscopie électronique en transmission des particules sphériques nanocristallines d'un aérogel obtenu selon ce protocole de synthèse décrit ci-dessus et séchage supercritique.

La présente invention a en outre pour objet un matériau céramique à base d'oxyde métallique susceptible d'être obtenu par le procédé décrit ci-avant.

Grâce au choix judicieusement combiné de la poudre et de la technique de frittage, le procédé selon l'invention permet de réaliser des plaques très fines ayant une épaisseur inférieure ou égale à 200 µm, de préférence inférieure au égale à 150 µm, de manière plus préférence encore entre 80 nm et 100 µm, et ayant une surface pouvant être comprise entre 1 et 50 cm², de préférence entre 2 et 50 cm², de façon plus préférée encore entre 3 et 50 cm².

Par ailleurs, le procédé de la présente invention permet de maîtriser très facilement le taux de densification de la céramique produite. Pour être utilisable en tant qu'électrolyte solide dans des SOFC, les plaques obtenues doivent être parfaitement étanches aux gaz. La Demanderesse a constaté que tel était le cas lorsque le taux de porosité des céramiques était inférieur à 4 %, de préférence compris entre 4 % et 1 %, et en particulier entre 3 et 1 %., déterminé soit par évaluation de la masse volumique apparente, soit par la méthode d'Archimède. Le matériau céramique, objet de la présente invention présente par conséquent de préférence un tel taux de porosité.

Comme indiqué en introduction, les matériaux céramiques de la présente invention conviennent parfaitement en tant qu'électrolytes solides pour des piles à combustible et des cellules d'électrolyse haute température. Leur bonne résistance mécanique permet d'y déposer les autres composants constitutifs de la cellule. La présente invention a par conséquent également pour objet une pile à combustible et une cellule d'électrolyse haute température comprenant un matériau céramique tel que défini ci-avant.

Une autre application intéressante des matériaux céramiques de la présente invention est celle des capteurs électrochimiques. Les matériaux denses et étanches, ayant un taux de porosité inférieur à 4 %, de préférence compris entre 1 et 4 %, conviennent en effet parfaitement en tant que sondes ou capteurs électrochimiques dans des systèmes de mesure ou de détection de composés divers tels que O₂, NOₓ, Cl₂, CO₂, CO, SO₂, SH₂ ou NH₃. La présente invention a par conséquent également pour objet l'utilisation des matériaux céramiques décrits ci-dessus en tant que capteurs électrochimiques et des appareils de mesure et/ou de détection comportant un tel matériau céramique, en tant que capteur électrochimique.

Enfin, les matériaux céramiques de la présente invention sont également très intéressants en tant que membranes de séparation utilisables pour presque toutes sortes de filtration. Le procédé de fabrication de la présente invention permet en effet une excellente maîtrise de la porosité du matériau final et il est ainsi facile de faire varier le taux de porosité et, par voie de conséquence, la taille des pores en fonction du type de filtration que l'on souhaite mettre en oeuvre. Les matériaux céramiques de la présente invention sont ainsi utilisables pour
- la macrofiltration (taille des pores supérieure à 2 µm),
- la microfiltration tangentielle ou frontale (taille des pores comprise entre 0,05 µm et 2 µm)
- l'ultrafiltration (taille des pores comprise entre 50 et 1 nm),
- la nanofiltration (taille des pores comprise entre 0,4 et 1 nm) et
- l'osmose inverse (taille des pores inférieure à 0,4 nm).

Bien entendu, pour pouvoir fonctionner en tant que membranes de séparation, les matériaux céramiques de la présente invention ne doivent pas être étanches mais permettre la perméation sélective des espèces chimiques (atomes, molécules, macromolécules) à séparer.

Par conséquent, pour que les matériaux céramiques soient utilisables en tant que membranes de séparation, leur taux de porosité doit être supérieur à la gamme mentionnée précédemment pour les applications en tant qu'électrolyte solide ou capteur électrochimique.

La présente invention a par conséquent en outre pour objet l'utilisation des matériaux céramiques de la présente invention, ayant de préférence un taux de porosité supérieur à 4 % et allant jusqu'à 30 %, de préférence compris entre 6 et 25 %, en tant que membranes de filtration.

Dans cette dernière application, les matériaux céramiques se distinguent, entre autres, par une excellente résistance mécanique qui permet la mise en oeuvre de procédés de filtration sous pression, et par une bonne résistance chimique et thermique. La bonne tenue aux hautes températures des membranes permet ainsi un nettoyage efficace par exemple par combustion des impuretés organiques colmatant les pores.

### Exemple

### Céramiques autosupportées d'oxyde de zircone et d'yttrium (ZrO₂-8%Y₂O₃)

### (a) Synthèse de la poudre d'oxyde par voie sol-gel à partir de sels métalliques :

On prépare une solution aqueuse acide contenant 1,68 mol/L de nitrate de zirconium, 0,32 mol/L de nitrate d'yttrium, 0,94 mol/L d'acétylacétone (ACAC) et 0,94 mol/L hexaméthylène-tétramine (HMTA), la solution présentant un pH de 3,2. On chauffe le mélange pendant 15 minutes à une température de 80 °C jusqu'à obtention d'une solution gélifiée présentant une viscosité d'environ 40 mPa.s à 25 °C.

Après séchage du gel et un traitement de décomposition à 400 °C sous balayage d'air pendant 7 heures, le résidu amorphe est calciné à 800 °C pendant 2 heures.

On obtient un matériau pulvérulent, cristallisé dans la structure fluorine, de groupe d'espace Fₘ₃ₘ, constitué de particules élémentaires monocristallines de forme sphérique, présentant un diamètre moyen de 20 nm. Les particules élémentaires sont rassemblées en agglomérats fortement aérés présentant une taille moyenne de 10 µm. La surface spécifique de cette poudre est d'environ 50 m²/g.

### (b) Fabrication du matériau céramique par frittage flash :

On introduit cinq couches de poudre d'oxyde de zircone et d'yttrium de 0,36 g chacune dans un moule cylindrique de diamètre intérieur de 20 mm en graphite, en les séparant les unes des autres par des feuilles de graphite. L'ensemble est porté à 1200 °C avec une rampe de montée en température de 50 °C/min et maintenu à cette température pendant 20 minutes. Une fois la température de consigne atteinte, on applique à l'aide d'un piston une pression uniaxiale croissante atteignant 100 MPa au bout de 2 minutes, puis on maintient cette pression pendant 13 minutes. On réduit ensuite progressivement en 5 minutes la pression appliquée jusqu'à pression normale tout en maintenant la température à 1200 °C.

A la fin de la réduction de la pression, on diminue progressivement la température à raison de 20 °C/minute jusqu'au retour à température ambiante.

Le courant appliqué est augmenté progressivement au cours de la phase de chauffage jusqu'à atteindre environ 1600 A en début de compression lorsque la température de consigne (1200 °C) est atteinte.

On soumet l'empilement de plaques céramiques séparées par des feuilles de graphite à un traitement thermique sous air à 700 °C afin de décomposer les feuilles de graphite intercalaires.

Nous avons pu ainsi fabriquer cinq plaques rondes de céramique autosupportées de moins de 200 µm d'épaisseur, de 20 mm de diamètre, présentant un taux de porosité inférieur à 2 %.

## Revendications

1. Procédé de fabrication d'un matériau céramique à base d'oxyde métallique, comprenant, dans l'ordre, les étapes suivantes :
(a) l'introduction, dans un dispositif de frittage flash, d'une pluralité de couches d'une poudre nanocristalline ;
(b) le frittage flash de ladite poudre par application d'une pression comprise entre 50 et 150 MPa, à une température comprise entre 850 °C et 1400 °C, pendant une durée comprise entre 5 et 30 minutes ;
la poudre nanocristalline comprenant des cristallites et des agglomérats de cristallites d'un matériau de formule
Zr₁₋ₓMₓO₂ où M est choisi parmi l'yttrium, le scandium et le cérium, ou
Ce₁₋ₓM'ₓO₂, où M' est choisi parmi le gadolinium, le scandium, le samarium et l'yttrium,
où x est compris entre 0 et 0,2,
ladite poudre possédant
o une taille moyenne de cristallites, mesurée par diffraction de rayons X, comprise entre 5 et 50 nm (nanomètres),
o une taille moyenne d'agglomérats de cristallites, mesurée par microscopie à balayage (MEB), comprise entre 0,5 et 20 µm (micromètres),
o une surface spécifique, mesurée par BET, comprise entre 20 et 100 m²/g,
les différentes couches étant séparées les unes des autres par une feuille de séparation capable de résister aux conditions thermiques et mécaniques de l'étape de frittage (b), de manière à obtenir après l'étape de frittage (b) un empilement de plusieurs plaques de céramiques et de feuilles de séparation disposées en alternance.

2. Procédé de fabrication d'un matériau céramique à base d'oxyde métallique selon la revendication 1, **caractérisé par le fait que** les feuilles de séparation sont des feuilles de graphite et que l'étape (c) comprend un traitement sous air à une température comprise entre 700 et 900 °C de l'empilement fritté.

3. Procédé de fabrication d'un matériau céramique à base d'oxyde métallique selon l'une quelconque des revendications précédentes, **caractérisé en ce qu'**il comprend en outre, avant l'étape (a) d'introduction de la poudre nanocristalline, une étape supplémentaire consistant en la synthèse de ladite poudre par une technique sol-gel.

4. Procédé de fabrication d'un matériau céramique à base d'oxyde métallique selon la revendication 3, **caractérisé en ce que** la poudre nanocristalline est synthétisée à partir d'une solution aqueuse acide de sels de zirconium, éventuellement en mélange avec un sel d'yttrium, de scandium ou de cérium, ou de sels de cérium, éventuellement en mélange avec un sel de gadolinium, de scandium, de samarium ou d'yttrium, ladite solution contenant en outre de l'hexaméthylène-tétramine (HMTA) et d'acétylacétone (ACAC).

5. Procédé de fabrication d'un matériau céramique à base d'oxyde métallique selon la revendication 3, **caractérisé en ce que** la poudre nanocristalline est synthétisée par voie sol-gel à partir de tétraalcoxy-zirconium et de sel d'yttrium en présence d'un agent chélatant.

6. Procédé selon l'une quelconque des revendications précédentes, **caractérisé en ce que** la température de l'étape (b) est comprise entre 1000 °C et 1300 °C, de préférence entre 1100 °C et 1250 °C.

7. Procédé selon l'une quelconque des revendications précédentes, **caractérisé en ce que** la pression appliquée au cours de l'étape (b) est comprise entre 80 et 120 MPa, de préférence entre 90 et 110 MPa.

8. Procédé selon l'une quelconque des revendications précédentes, **caractérisé en ce que** la durée de l'étape (b) est comprise entre 10 et 30 minutes, de préférence entre 15 et 25 minutes.

9. Procédé de fabrication d'un matériau céramique à base d'oxyde métallique selon l'une quelconque des revendications précédentes, **caractérisé par le fait qu'**il comprend en outre une étape (c) de traitement thermique et/ou chimique de l'empilement obtenu à l'issue de l'étape de frittage (b) permettant de faire disparaître sélectivement les feuilles de séparation.

10. Matériau céramique à base d'oxyde métallique sous forme d'un empilement de plusieurs plaques de céramiques et de feuilles de séparation disposées en alternance susceptible d'être obtenu par le procédé selon l'une quelconque des revendications 1 à 8.

## Patentansprüche

1. Verfahren zur Herstellung eines keramischen Werkstoffs auf der Basis von Metalloxid, das in dieser Reihenfolge die folgenden Schritte umfasst:
(a) Einbringen einer Mehrzahl Schichten eines nanokristallinen Pulvers in eine Spark-Plasma-Sinter-Vorrichtung;
(b) Spark-Plasma-Sintern des Pulvers durch Anlegen eines Drucks zwischen 50 und 150 MPa bei einer Temperatur zwischen 850°C und 1400°C für einen Zeitraum von 5 bis 30 Minuten;
wobei das nanokristalline Pulver Kristallite und Agglomerate von Kristalliten eines Werkstoffs der folgenden Formel umfasst
Zr₁₋ₓMₓO₂, wobei M aus Yttrium, Scandium und Cer ausgewählt ist, oder
Ce₁₋ₓM'ₓO₂, wobei M' aus Gadolinium, Scandium, Samarium und Yttrium ausgewählt ist,
wobei x zwischen 0 und 0,2 beträgt,
wobei das Pulver Folgendes besitzt
∘ eine mittels Röntgenbeugung gemessene durchschnittliche Kristallitgröße zwischen 5 und 50 nm (Nanometer),
∘ eine mittels Rasterelektronenmikroskopie (SEM) gemessene durchschnittliche Größe von Kristallit-Agglomeraten zwischen 0,5 und 20 µm (Mikrometer),
∘ eine mittels BET gemessene spezifische Oberfläche zwischen 20 und 100 m²/g,
wobei die verschiedenen Schichten voneinander durch eine Trennfolie getrennt sind, die gegenüber den thermischen und mechanischen Bedingungen des Sinter-Schritts (b) beständig ist, so dass nach dem Sinter-Schritt (b) ein Stapel abwechselnd aufeinander geschichteter keramischer Platten und Trennfolien erhalten wird.

2. Verfahren zur Herstellung eines keramischen Werkstoffs auf der Basis von Metalloxid nach Anspruch 1, **dadurch gekennzeichnet, dass** es sich bei den Trennfolien um Graphitfolien handelt und dass Schritt (c) eine Behandlung des gesinterten Stapels in Luft bei einer Temperatur zwischen 700 und 900°C umfasst.

3. Verfahren zur Herstellung eines keramischen Werkstoffs auf der Basis von Metalloxid nach einem der vorhergehenden Ansprüche, **dadurch gekennzeichnet, dass** es außerdem vor Schritt (a) des Einbringens des nanokristallinen Pulvers einen zusätzlichen Schritt umfasst, der aus der Synthese des Pulvers durch eine Sol-Gel-Technik besteht.

4. Verfahren zur Herstellung eines keramischen Werkstoffs auf der Basis von Metalloxid nach Anspruch 3, **dadurch gekennzeichnet, dass** das nanokristalline Pulver ausgehend von einer sauren wässrigen Lösung von Zirkonsalzen, gegebenenfalls im Gemisch mit einem Yttrium-, Scandium- oder Cersalz, oder Cersalzen, gegebenenfalls in Gemisch mit einem Gadolinium-, Scandium-, Samarium- oder Yttriumsalz, synthetisiert wird, wobei die Lösung außerdem Hexamethylentetramin (HMTA) und Acetylaceton (ACAC) enthält.

5. Verfahren zur Herstellung eines keramischen Werkstoffs auf der Basis von Metalloxid nach Anspruch 3, **dadurch gekennzeichnet, dass** das nanokristalline Pulver mittels Sol-Gel ausgehend von Tetraalkoxyzirkon und Yttriumsalz in Gegenwart eines Chelatbildungsmittels synthetisiert wird.

6. Verfahren nach einem der vorhergehenden Ansprüche, **dadurch gekennzeichnet, dass** die Temperatur im Schritt (b) zwischen 1000°C und 1300°C, vorzugsweise zwischen 1100°C und 1250°C, beträgt.

7. Verfahren nach einem der vorhergehenden Ansprüche, **dadurch gekennzeichnet, dass** der während Schritt (b) angelegte Druck zwischen 80 und 120 MPa, vorzugsweise zwischen 90 und 110 MPa, beträgt.

8. Verfahren nach einem der vorhergehenden Ansprüche, **dadurch gekennzeichnet, dass** die Dauer von Schritt (b) zwischen 10 und 30 Minuten, vorzugsweise zwischen 15 und 25 Minuten, beträgt.

9. Verfahren zur Herstellung eines keramischen Werkstoffs auf der Basis von Metalloxid nach einem der vorhergehenden Ansprüche, **dadurch gekennzeichnet, dass** es außerdem einen Schritt (c) der thermischen und/oder chemischen Behandlung des nach dem Sinter-Schritt (b) erhaltenen Stapels umfasst, wodurch man selektiv die Trennfolien verschwinden lassen kann.

10. Keramischer Werkstoff auf der Basis von Metalloxid in Form eines Stapels abwechselnd aufeinander geschichteter keramischer Platten und Trennfolien, der durch das Verfahren nach einem der Ansprüche 1 bis 8 erhältlich ist.

## Claims

1. Method for producing a metal oxide-based ceramic material, comprising, in the following order, the following steps:
(a) introducing, in a flash sintering device, a plurality of layers of a nanocrystalline powder;
(b) flash sintering said powder by applying a pressure between 50 and 150 MPa, at a temperature between 850°C and 1400°C, for a duration between 5 and 30 minutes; the nanocrystalline powder comprising crystallites and crystallite agglomerates of a material having the formula
Zr₁₋ₓMₓO₂ where M is chosen from yttrium, scandium and cerium, or
Ce₁₋ₓM'ₓO₂, where M' is chosen from gadolinium, scandium, samarium and yttrium, where x is between 0 and 0.2,
said powder having
o a mean crystallite size, measured by X-ray diffraction, between 5 and 50 nm (nanometres),
o a mean crystallite agglomerate size, measured by scanning microscopy (SEM), between 0.5 and 20 µm (micrometres),
o a specific surface area, measured by BET, between 20 and 100 m²/g,
the various layers being separated from one another by a separation sheet capable of withstanding the thermal and mechanical conditions in the sintering step (b), so as to obtain after the sintering step (b) a stack of a plurality of ceramic plates and separation sheets arranged in alternation.

2. Method for producing a metal oxide-based ceramic material according to claim 1, **characterised in that** the separation sheets are sheets of graphite and that step (c) comprises a treatment in air at a temperature between 700 and 900°C of the sintered stack.

3. Method for producing a metal oxide-based ceramic material according to any one of the preceding claims, **characterised in that** it further comprises, prior to the step (a) for introducing the nanocrystalline powder, an additional step consisting of the synthesis of said powder by a sol-gel technique.

4. Method for producing a metal oxide-based ceramic material according to claim 3, **characterised in that** the nanocrystalline powder is synthesised from an acidic aqueous solution of zirconium salts, optionally in a mixture with an yttrium, scandium or cerium salt, or of cerium salts, optionally in a mixture with a gadolinium, scandium, samarium or yttrium salt, said solution further containing hexamethylenetetramine (HMTA) and acetylacetone (ACAC).

5. Method for producing a metal oxide-based ceramic material according to claim 3, **characterised in that** the nanocrystalline powder is synthesised by a sol-gel process from tetraalkoxy-zirconium and yttrium salt in the presence of a chelating agent.

6. Method according to any one of the preceding claims, **characterised in that** the temperature in step (b) is between 1000°C and 1300°, preferably between 1100°C and 1250°C.

7. Method according to any one of the preceding claims, **characterised in that** the pressure applied during step (b) is between 80 and 120 MPa, preferably between 90 and 110 MPa.

8. Method according to any one of the preceding claims, **characterised in that** the duration of step (b) is between 10 and 30 minutes, preferably between 15 and 25 minutes.

9. Method for producing a metal oxide-based ceramic material according to any one of the preceding claims, **characterised in that** it further comprises a step (c) for thermal and/or chemical treatment of the stack obtained following the sintering step (b) suitable for making the separation sheets selectively disappear.

10. Metal oxide-based ceramic material in the form of a stack of a plurality of ceramic plates and separation sheets arranged in alternation suitable for being obtained using the method according to any one of claims 1 to 8.
